## Europäisches Patentamt
## European Patent Office
## Office européen des brevets

(19)

(11) Veröffentlichungsnummer: **0 039 041**
A2

(12) # EUROPÄISCHE PATENTANMELDUNG

(21) Anmeldenummer: 81103012.1

(22) Anmeldetag: 21.04.81

(51) Int. Cl.³: **B 29 D 27/02**

(30) Priorität: 29.04.80 DE 3016445

(43) Veröffentlichungstag der Anmeldung:
04.11.81 Patentblatt 81/44

(84) Benannte Vertragsstaaten:
AT BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Krippl, Kurt
Niederstrasse 104
D-4019 Monheim(DE)

(72) Erfinder: Hoffmann, Erwin
Martin-Buber-Strasse 47
D-5090 Leverkusen 3(DE)

(54) **Vorrichtung zum Auftragen eines insbesondere Schaumstoff bildenden Reaktionsgemisches aus mindestens zwei fliessfähigen Komponenten auf eine wandernde Unterlage.**

(57) Um beim Auftragen eines insbesondere Schaumstoff bildenden Reaktionsgemisches aus mindestens zwei fließfähigen Reaktionskomponenten auf eine wandernde Unterlage ein einwandfreies Endprodukt zu erhalten, wird das hierfür erforderliche Auftragen eines gleichalten Reaktionsgemisches auf die Unterlage dadurch erzielt, daß von einem Mischkopf (5,45), bis zu den verschiedenen Einmündungen (8,48) in einen Auftragsbalken (1,41) das Reaktionsgemisch jeweils die gleiche Zeit benötigt, und daß sich von den Einmündungen (8,48) parallel angeordnete Ausnehmungen (10,50) zu einem gemeinsamen Düsenschlitz (11,51) erstrecken, wobei die Tiefe (t) der Ausnehmungen (10,50) in der Weise abnimmt, daß durch die fächerartige Erweiterung, in Arbeitsrichtung gesehen, überall der gleiche Durchströmquerschnitt erhalten bleibt und auf diese Weise die Strömungszeit von den Einmündungen (8,48) bis zum Düsenschlitz (11,51) überall wenigstens annähernd gleich ist.

FIG.1

EP 0 039 041 A2

Croydon Printing Company Ltd.

BAYER AKTIENGESELLSCHAFT          5090 Leverkusen, Bayerwerk

Zentralbereich                    Mr/bc/c
Patente, Marken und Lizenzen


Vorrichtung zum Auftragen eines insbesondere Schaumstoff
bildenden Reaktionsgemisches aus mindestens zwei fließfähigen Komponenten auf eine wandernde Unterlage

Die Erfindung bezieht sich auf eine Vorrichtung zum Auftragen eines insbesondere Schaumstoff bildenden Reaktionsgemisches aus mindestens zwei fließfähigen Komponenten
auf eine wandernde Unterlage, bestehend aus Vorratsbehältern, von denen Versorgungsleitungen über Dosierpumpen zu einem Mischkopf führen, dessen Auslaß über Zuleitungen mit einem quer über der wandernden Unterlage angeordneten Auftragsbalken verbunden ist, der mit einem
Düsenschlitz versehen ist.

Zum Herstellen von Blockschaumstoff oder von Sandwichplatten bedient man sich kontinuierlich arbeitender Anlagen, bei denen ein Reaktionsgemisch auf eine wandernde Unterlage, z.B. eine auf einem Transportband transportierte Papierfolie oder Deckschicht, aufgegeben wird.
Während des Transportes durch die Anlage reagiert das
Gemisch dann aus. Vorrichtungen dieser Art dienen vornehmlich der Herstellung von Schaumstoffbahnen oder einen Schaumstoffkern enthaltende Sandwichbahnen, aber auch der Herstellung von Massivstoffen.

Zum Auftragen des Gemisches auf die wandernde Unterlage benutzt man beispielsweise einen über die Auftragsbreite hin und her wandernden Mischkopf. Dabei entsteht ein zeilenförmiger Auftrag, der erst noch durch eine Egalisierwalze vergleichmäßigt werden muß. Es sind auch schon Mischköpfe im Gebrauch, bei denen am Auslaß ein verzweigtes Auslaufrohr mit mehreren Auslaßenden vorgesehen ist.

Schließlich ist aus der DE-OS 1 958 061 eine Auftragsvorrichtung bekannt, bei der der Mischkopf über Zuleitungen mit einem Auftragsbalken verbunden ist, wobei sich innerhalb des Auftragsbalkens Zahnradwalzen befinden, die das Gemisch zu einem düsenartigen Auftragsschlitz zudosieren. Diese Vorrichtung ist recht aufwendig und außerordentlich schlecht zu reinigen.

Da der Trend zu immer größeren Arbeitsbreiten und zur Verarbeitung schneller reagierender Gemische geht, und gleichzeitig höhere Anforderungen an das Endprodukt gestellt werden, genügen die vorbekannten Vorrichtungen diesen Anforderungen nicht mehr, weil ihre Gemischverteilung unzulänglich ist und/oder der apparative Aufwand nicht vertretbar ist.

Es liegt die Aufgabe vor, eine Auftragsvorrichtung zu schaffen, die bei einfacher, betriebssicherer Bauweise einen gleichmäßigen Gemischauftrag auf die wandernde Unterlage und ein einwandfreies Endprodukt gewährleistet.

Le A 20 278 -Ausland

Die Lösung ist darin zu sehen, daß der Auftragsbalken mehrere nebeneinander angeordnete Ausnehmungen aufweist, die sich von den Einmündungen der Zuleitung zu einem gemeinsamen Düsenschlitz fächerartig erweitern, wobei die Länge der Zuleitung von dem Auslaß des Mischkopfes bis zu den Einmündungen überall gleich groß ist, und wobei die Tiefe der Ausnehmungen von den Einmündungen zum Düsenschlitz hin in der Weise abnimmt, daß ein gleichbleibender Durchströmquerschnitt erhalten bleibt.

Dadurch wird erreicht, daß das aus dem Mischkopf zu einem gedachten Zeitpunkt austretende Reaktionsgemisch zu einem späteren, für alle Einmündungen gleichen Zeitpunkt, aus diesen austritt. In den durch die Ausnehmungen gebildeten Wannen kann sich die Strömung zunächst beruhigen und durch die erfindungsgemäße Profilgebung findet eine gleichmäßige Verteilung über die Breite jeder Ausnehmung statt, so daß sich die Ströme nebeneinander liegender Ausnehmungen kurz vor dem Düsenschlitz vereinigen. Dadurch benötigen alle Gemischpartikelchen wenigstens annähernd die gleiche Zeit, um von den Einmündungen zum Düsenschlitz zu gelangen. Das Gemisch weist im Augenblick des Ausströmens aus dem Düsenschlitz ein außerordentlich enges Spektrum hinsichtlich seines Alters auf. Dies ist sehr wichtig, denn das Alter eines Gemisches ist der Maßstab für die fortgeschrittene Reaktion. Bilden sich nämlich beispielsweise Strömungen heraus, so daß über die Breite der Unterlage gesehen verschieden altes Gemisch aufgetragen wird, so zeigt das Endprodukt inhomogene Dichte, Schlieren oder andere Fehlerstellen, d.h. die Qualität des Endproduktes ist von dem Auftragen eines sich im gleichen Reaktionszustand befindlichen Gemisches über die gesamte Breite der Unterlage ausschlaggebend. Gleichzeitig bietet die Überlaufkante

Le A 20 278

eine Gewähr dafür, daß ein gleichmäßig starker Film vom Reaktionsgemisch auf die Unterlage aufgetragen wird, wodurch eine entsprechende gewünschte gleichmäßige Höhe des Endproduktes erzielbar ist.

Für die Ausgestaltung der Zuleitungen vom Mischkopf zum Auftragsbalken ergibt sich die Möglichkeit der Verwendung von gleichlangen Schläuchen oder es ist für eine entsprechende Verrohrung oder Kanalisierung zu sorgen, wobei beispielsweise von einem einzigen Hauptrohr sich weiter verzweigende Rohre bzw. Kanäle abführen.

Welche Anzahl von fächerförmigen Ausnehmungen man über die Breite des Gießbalkens anordnet, hängt selbstverständlich in erster Linie von der Arbeitsbreite ab; aber außerdem auch von dem Durchsatz. Mehrere kleinere Ausnehmungen sind vorteilhafter als wenige große.

In einfachster Weise kann die fächerartige Erweiterung in der Draufsicht dreieckartig gestaltet sein, indem die seitlichen Wände gerade verlaufen.

Um ein günstigeres Strömungsprofil zu erzielen, führt man die Seitenwände jedoch vorteilhafterweise geschwungen aus. Diese Ausführungsform verhindert wegen der günstigen Strömungseigenschaften das Ansetzen des Reaktionsgemisches an den Wandungen und gestattet eine genauere Ausbildung eines gewünschten Geschwindigkeitsprofils im Sinne des Austritts von Reaktionsgemisch gleichen Alters aus dem Düsenschlitz.

Nach einer weiteren besonderen Ausführungsform ist jede zu einer Ausnehmung führende Zuleitung mit einem Absperrhahn versehen.

Le A 20 278 -Ausland

Bei der Wahl einer geeigneten Breite der Ausnehmungen und Abstimmung der Anzahl von Ausnehmungen auf vorgesehene Standardbreiten von zu fertigenden Bahnen, ist es möglich, durch Zu- oder Abschalten von außen gelegenen Ausnehmungen die Auftragsbreite in der gewünschten Weise einzustellen.

Die Absperrhähne sind vorzugsweise als Drosselorgane ausgeführt.

Dadurch wird erreicht, daß der Zustrom des Gemisches erforderlichenfalls reguliert werden kann.

In der Zeichnung ist die erfindungsgemäße Vorrichtung in zwei Ausführungsbeispielen rein schematisch dargestellt und nachstehend näher erläutert. Es zeigen:

Fig. 1 die Vorrichtung in der Draufsicht ohne obere Düsenplatte,
Fig. 2 einen Schnitt gemäß Linie A-B in Fig. 1,
Fig. 3 einen Schnitt gemäß Linie C-D in Fig. 1,
Fig. 4 einen Auftragsbalken gemäß einem zweiten Ausführungsbeispiel in der Unteransicht ohne untere Düsenplatte,
Fig. 5 einen Schnitt gemäß Linie E-F in Fig. 4
Fig. 6 einen Schnitt gemäß Linie G-H in Fig. 4 und
Fig. 7 einen Schnitt gemäß Linie I-K in Fig. 4.

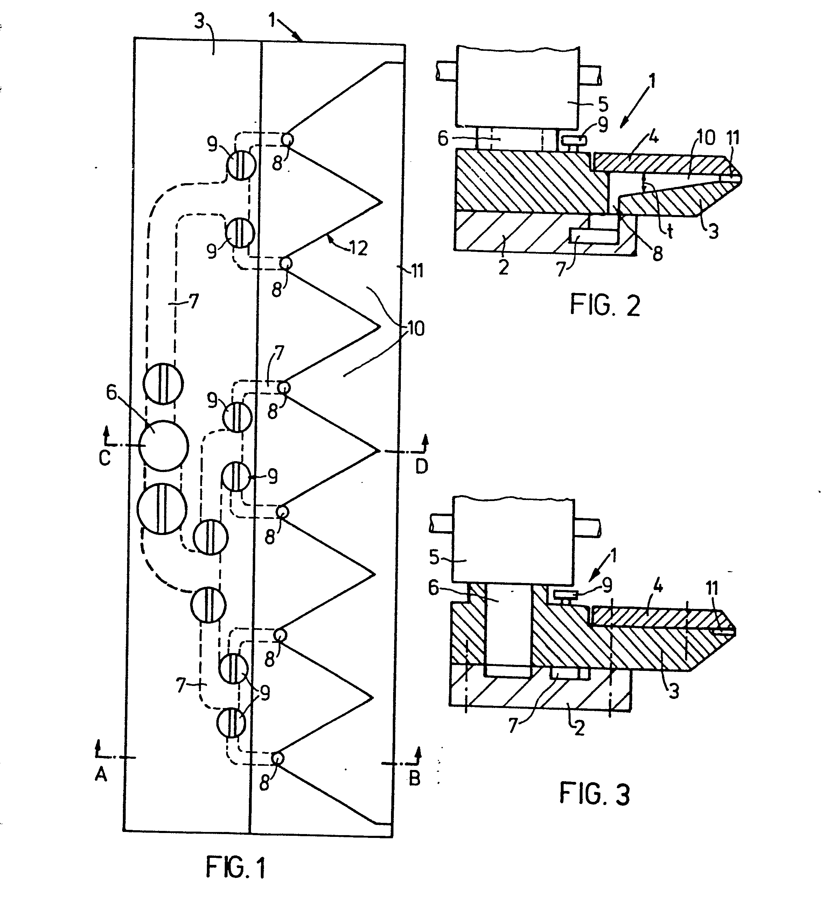

In den Figuren 1 bis 3 besteht ein Auftragsbalken 1 aus einer Verteilerplatte 2, die unterhalb einer unteren Düsenplatte 3 angeordnet ist, und aus einer oberen Düsenplatte 4. Von einem Mischkopf 5 gelangt das Gemisch über eine Auslaßöffnung 6 in eine

Le A 20 278

Zuleitung 7, die sich innerhalb der Verteilerplatte 2 in Form von eingefrästen Kanälen verzweigt und zu in der unteren Düsenplatte 3 angeordneten Einmündungen 8 führt. Alle Zweigkanäle der Zuleitung 7 sind mit Absperrhähnen 9 versehen, die auch als Drosselorgane verwendbar sind. Von den Einmündungen 8 erstrecken sich parallel angeordnete Ausnehmungen 10 zu einem gemeinsamen Düsenschlitz 11, der zwischen der unteren Düsenplatte 3 und der oberen Düsenplatte 4 gebildet ist.

Die Ausnehmungen 10 haben jeweils im Bereich der Einmündung 8 ihre größte Tiefe t, die zum Düsenschlitz 11 hin abnimmt, so daß aufgrund der fächerförmigen Erweiterung der Ausnehmungen 10 in Arbeitsrichtung gesehen, überall der gleiche Durchströmquerschnitt erhalten bleibt. Die Seitenwände 12 der Ausnehmungen 10 verlaufen gerade.

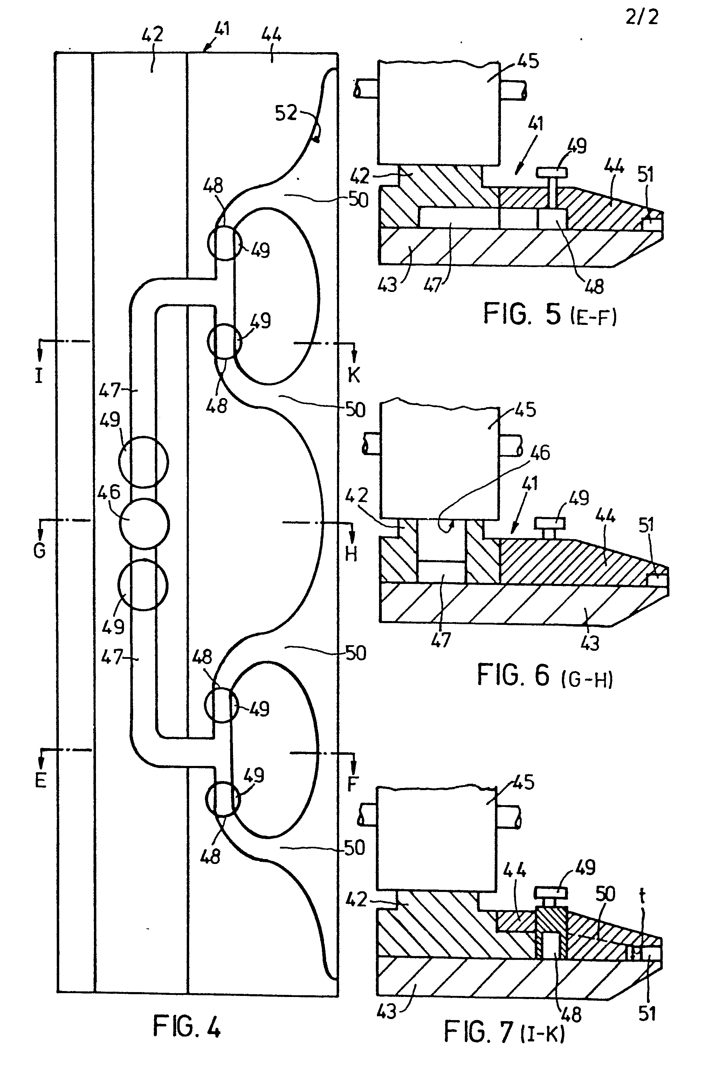

In Fig. 4 bis 6 besteht ein Auftragsbalken 41 aus einer oben angeordneten Verteilerplatte 42, einer unteren Düsenplatte 43 und einer oberen Düsenplatte 44. An den Auslaß 46 eines Mischkopfes 45 schließt eine Zuleitung 47 an, die als sich verzweigende Kanäle zu Einmündungen 48 führt. In den Kanälen sind Absperrhähne 49 vorgesehen, die auch als Drosselorgane verwendbar sind. Von den Einmündungen 48 erstrecken sich in der oberen Düsenplatte 44 parallel zueinander angeordnete Ausnehmungen 50 bis zu einem gemeinsamen Düsenschlitz 51. Die Tiefe t der Ausnehmungen 50 nimmt von den Einmündungen 48 zum Düsenschlitz 51 hin ab, während sich ihre Breite gleichzeitig in der Weise vergrößert, daß, in Arbeitsrichtung gesehen, ein gleichbleibender Durchströmquerschnitt erhalten bleibt. Die
Seitenwände 52 der Ausnehmungen 50 sind geschwungen
ausgeführt, um ein besonders günstiges Strömungsprofil
zu erzielen.

Patentansprüche

1) Vorrichtung zum Auftragen eines insbesondere Schaumstoff bildenden Reaktionsgemisches aus mindestens zwei fließfähigen Komponenten auf eine wandernde Unterlage, bestehend aus Vorratsbehältern, von denen Versorgungsleitungen über Dosierpumpen zu einem Mischkopf (5,45) führen, dessen Auslaß (6,46) über Zuleitungen (7,47) mit einem quer über der wandernden Unterlage angeordneten Auftragsbalken (1,41) verbunden ist, der mit einem Düsenschlitz (11,51) versehen ist, dadurch gekennzeichnet, daß der Auftragsbalken (1,41) mehrere nebeneinander angeordnete Ausnehmungen (10,50) aufweist, die sich von den Einmündungen (8,48) der Zuleitung (7,47) zu einem gemeinsamen Düsenschlitz (11,51) fächerartig erweitern, wobei die Länge der Zuleitung (7, 47) von dem Auslaß (6,46) des Mischkopfes (5,45) bis zu den Einmündungen (8,48) überall gleich groß ist, und wobei die Tiefe (t) der Ausnehmungen (10,50) zum Düsenschlitz (11,51) in der Weise abnimmt, daß ein gleichbleibender Durchströmquerschnitt erhalten bleibt.

2) Vorrichtung nach Anspruch 1, dadurch gekennzeichnet, daß die Seitenwände (52) der Ausnehmungen (50) geschwungen ausgeführt sind.

3) Vorrichtung nach Anspruch 1 oder 2, dadurch gekennzeichnet, daß die sich verzweigende Zuleitung (7,47) mit Absperrhähnen (9,49) versehen ist.

4) Vorrichtung nach Anspruch 3, dadurch gekennzeichnet, daß die Absperrhähne (9,49) als Drosselorgane ausgebildet sind.

Le A 20 278 -Ausland

FIG. 1

FIG. 2

FIG. 3

0039041

2/2

FIG. 4

FIG. 5 (E-F)

FIG. 6 (G-H)

FIG. 7 (I-K)